# EUROPEAN PATENT APPLICATION

(11) **EP 2 273 758 A1**
(43) Date of publication of application: **12.01.2011**
(21) Application number: 09305662.0
(22) Date of filing: 09.07.2009
(51) Int. Cl.: H04L 29/08, G06F 21/00, G07F 7/10

(54) **Method of sending messages to an application embedded in a secured electronic token**

(71) Applicant: Gemalto SA, 92190 Meudon (FR)
(72) Inventor: Gallas, Frederic, 13400 Aubagne (FR); Mathian, Nicolas, 13400 Aubagne (FR)

(57) **Abstract**

The invention is a method of sending a message to an application embedded in a secured electronic token. The token is being intended to receive a first message from a distant machine. The token comprises a proxy agent and an admin agent which is able to manage the first message. The first message comprises a header and a body. The method comprises the steps of:
- building a second message from the body of the first message when the first message is received by the admin agent,
- forwarding the second message to the proxy agent if the header of the first message) contains an element having a preset value
- extracting an application identifier from the second message in the proxy agent,
- forwarding the second message to the application if the extracted application identifier corresponds to the application.

## Description

### (Field of the invention)

The present invention relates to the methods of sending messages to an application embedded in a secured electronic token. It relates particularly to methods of sending messages to applications which are embedded in SIM smart cards.

### (Prior art)

A secured electronic token such as a smart card may contain applications in the form of applets. These applets may be accessed by a remote server via an over the air channel, known as OTA. OTA mechanism is defined by the ETSI SCP 102.225, ETSI-SCP 102.226, 3GPP 31.115, 3GPP 31.116 and GlobalPlatform version 2.2 for RAM standards. The OTA channel allows accessing data and applications which have been specifically developed for SIM cards. Only smart cards intended to be used in Telecom domain or Machine To Machine (M2M) domain are able to manage an OTA communication. In particular SIM cards offer OTA features. These smart cards may also be accessed through the HyperText Transfer Protocol, usually called HTTP. In particular, the OMA-SCWS standard versions 1.0 and later define an administration protocol for the OTA administration of the Smart Card Web Server (SCWS) resources. This protocol is based on a HTTP POST message sent by an Admin Agent application to the OTA server. The Admin Agent application is located in the smart card. As a response, the OTA server sends back a SCWS administration command in the body of the HTTP POST response. According to the standard, a fixed Content-Type is specified in the header of this HTTP POST response. At the reception of this message, and thanks to the Content-Type, the Admin Agent application forwards the body of the HTTP POST response to the SCWS for the execution of the administration commands it contains. Then, once these administrative commands have been executed by the SCWS, another HTTP POST request is sent by the Admin Agent application in order to notify the OTA server of the commands execution results. This result data is put in the body of this HTTP POST message, and a specific Content-Type is set in the header of this HTTP POST. Using a similar principle, the GlobalPlatform ® 2.2 standard (Amendment B "RAM over HTTP") and the ETSI 102 226 standard ("RFM over HTTP") have defined an administration protocol for the OTA administration of the Smart Card content. This channel is well suited for the Remote Applet Management (RAM) mechanism, for the administration of Security Domains, packages and applets. The GlobalPlatform ® 2.2 standard specifies a fixed pattern of Content-Type to be used in HTTP POST request messages and HTTP POST response messages.

Most of the applications developed for the SIM cards are designed with an Application Programming Interface (API) able to manage the OTA channel. These smart card applications are not able to manage the HTTP channel. It is not currently possible to target these applications because the routing of HTTP response has to be ensured by the Admin Agent that is not aware of any Content-type specific values except OMA-SCWS, RAM over Http and RFM over HTTP. In the three above-referenced standards, the Admin Agent application is a key component for the management of these "OTA over HTTP" protocols. Moreover, the Admin Agent application is generally part of the Operating System of smart cards. As a consequence, it is not easily possible to modify its behaviour.

There is a need for reusing the same "OTA over HTTP" protocol mechanism for purposes different from SCWS resources administration and Card content administration as defined by GlobalPlatform (GP) or ETSI standards. In particular, many existing applications embedded in SIM cards comply with the usual TS-31.115 SMS mechanism. These applications are not designed for managing HTTP mechanism and must remain unchanged since they successfully passed official certifications. Thus there is a need for accessing these legacy applications via the HTTP mechanism. In particular a distant server must be able to communicate with an application embedded in a smart card via an HTTP session in order to personalize the application or to use a service provided by the application.

### (Summary of the Invention)

An object of the invention is to solve the above mentioned technical problem.

The object of the present invention is a method of managing an application which is embedded in a secured electronic token. The secured electronic token is intended to receive a first message) from a distant machine. The secured electronic token comprises an admin agent that is capable of managing the first message. The first message has a header and a body. The secured electronic token comprises a proxy agent. The method comprises the steps of:
a) when the first message is received by the admin agent from the distant machine, building a second message from the body of said first message,
b) forwarding the second message to the proxy agent if the header of the first message contains an element having a preset value,
c) extracting an application identifier from the second message in the proxy agent,
d) forwarding the second message to the application if the extracted application identifier corresponds to said application.

Advantageously, the application may generate a response to the second message and the method may comprise the step of forwarding the response to the distant machine via successively the proxy agent and the admin agent.

In a preferred embodiment, the first message may comply with HTTP or HTTPS format.

Advantageously, the forwarding step of the second message may be performed if the element is the Content-Type field as defined by the HTTP (RFC 2616 HTTP/1.1) standard.

In a preferred embodiment, the second message may comply with 3GPP TS 31.115 or 3GPP TS 102.225 standards.

Advantageously, the forwarding of the second message by the proxy agent may depend on a successful checking of preset security rules associated to the application.

Another object of the invention is a secure electronic token intended to receive a first message from a distant machine. The first message has a header and a body. The secured electronic token comprises an admin agent which is capable of managing the first message and capable of building a second message from the body of the first message. The secure electronic token is being intended to comprise an application. The secure electronic token comprises a proxy agent. The admin agent comprises a first means which is capable of checking if the header of the first message contains an element having a preset value. The proxy agent comprises a second means capable of extracting an application identifier from the second message. The proxy agent comprises a third means capable of forwarding the second message to the application if the extracted application identifier corresponds to the application.

Advantageously, the application may generate a response to the second message and the proxy agent may comprise a fourth means capable of forwarding the response to the admin agent.

In a preferred embodiment, the first message may comply with HTTP or HTTPS format

Advantageously, the first means may be capable of checking if the Content-Type field of the header of the first message contains a preset value.

In a preferred embodiment, the second message may comply with 3GPP TS 31.115 or 3GPP TS 102.225 standards.

In a preferred embodiment, the secured electronic token may be a smart card.

Advantageously, the proxy agent may comprise a fifth means capable of checking preset security rules associated to the application.

Alternatively, preset security rules may be associated to the application and the proxy agent may comprise a sixth means capable of delegating the checking of the preset security rules to a security domain as defined by GlobalPlatform version 2.2 for RAM standard.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a secured electronic token which communicate with a distant server via a host machine according to the invention; and
- Figure 2 is an example of message exchanges between a distant server and an application embedded in a secure token according to the invention.

### (Detailed description of the preferred embodiments)

The invention may apply to any types of secured electronic token intended to contain applications which are compliant with the 3GPP TS 31.115 standard. In particular, the present invention may also apply to secure electronic token using the HyperText Transfer Protocol Secure, usually called HTTPS. In this specification, the secured electronic token is a SIM card but it could be any other kind of secured electronic device able to use the HTTP or HTTPS mechanisms. A secured electronic token may be portable and may contain one or several memories, a microprocessor and a communication interface. In this specification, the secured electronic token is connected to a host machine. In particular, the host machine may be a mobile phone or telecom terminal. The electronic token accesses the remote server through the host machine. Alternatively, HTTP messages may be directly exchanged between the secure electronic token and the server machine without any intermediate host machine.

The present invention relies on an enhanced administration agent and a proxy agent which allows the routing of messages up to an embedded application. Both the agent and the application are stored into the secure electronic token. A distant server sends a message comprising a header and a body. The message body is intended to be received by the registered application. When registered, the application is associated to a specific value of a header field. According to the invention, the agent is an enhanced Admin Agent application. When receiving a message from the distant server the agent is able to route a part of this message to a dedicated proxy agent. The proxy agent will then forward the message to the targeted application.

Thanks to the invention, the distant server always uses the standard HTTP mechanism and remains fully independent of interface constraints of the targeted application. The agent manages issues and data formatting for the targeted application. From the targeted application point of view, the communication is identical whatever the used communication mode is. Thus the targeted application remains independent of the transport format between the server and the secure electronic token.

An advantage of the invention is to avoid the upgrade of the used telecom terminal. Such an upgrade is heavy to manage and costly since the number of telecom terminals on the field is huge. Moreover there are many different kinds of mobile handsets already deployed.

Another advantage of the invention is to avoid the deployment of several basic Admin Agent applications in a single token. Such a deployment of several agents is memory consuming and needs heavy validation, audits and certifications related to security issues.

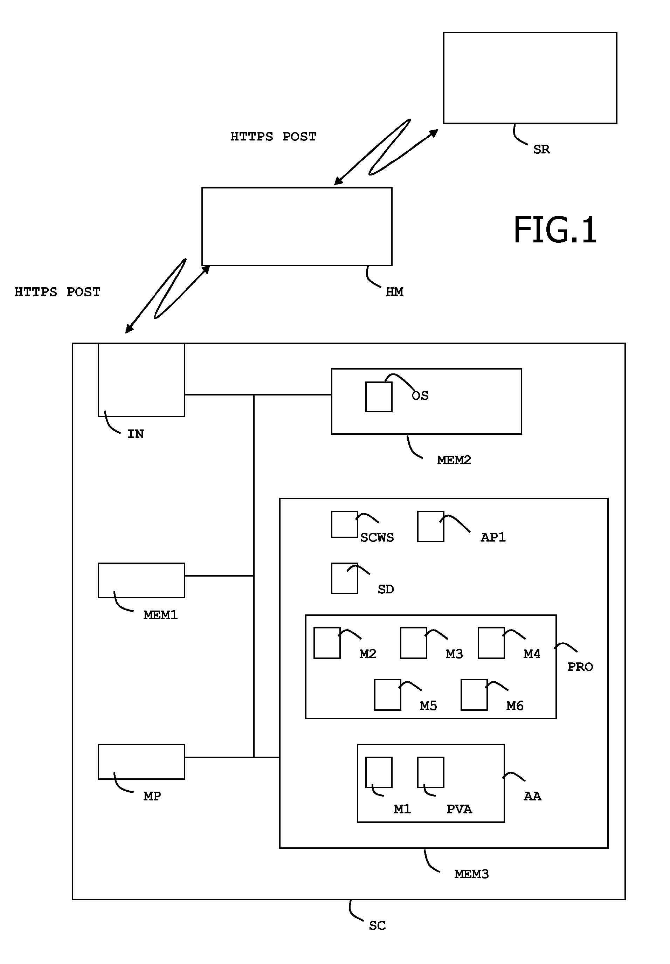

**Figure 1** shows the architecture of a secure electronic token SC of SIM card type according to a preferred embodiment of the invention.

The secure electronic token SC comprises a working memory MEM1 of RAM type, two non volatile memories MEM2 and MEM3, a microprocessor MP and a communication interface IN. The non volatile memory MEM2 comprises an operating system OS which may contain a Java Virtual Machine.

The non volatile memory MEM3 comprises one applet AP1, a smart card web server SCWS, a security domain SD, an administration agent AA and a proxy agent PRO. The security domain SD complies with the GlobalPlatform standard.

The two memories MEM2 and MEM3 may be implemented as any combinations of one, two or more memories. These memories may be NAND flash or EEPROM memory or another type of non volatile memory.

The SIM card SC is intended to exchange messages with a telecom handset HM through the communication interface IN. The telecom handset HM is intended to exchange messages with a distant server SR via the OTA mechanism. Thus the SIM card SC may exchange messages distant server SR through the connected host machine HM.

The administration agent AA may be implemented as an applet in a Java Card. The administration agent AA comprises a preset value PVA and a means M1 able to check if the header of the received HTTP messages contains an element having the preset value PVA. In a preferred embodiment, the means M1 is able to check if the Content-Type field of a header of the received message MG1 contains the preset value PVA. The administration agent AA is able to receive a HTTP message MG1 from the distant server SR. The administration agent AA is able to build a message MG2 from a part of the message MG1. The administration agent AA is able to send the proxy agent PRO. The proxy agent PRO is able to generate a message MG3 from the message MG2 and to send the message MG3 to the application AP1.

The administration agent AA is able to receive a response message R2 from the proxy agent PRO and to build a HTTP POST message R1 from the response message R2. The administration agent AA is able to send the response message R1 to the distant server SR.

In this example the application AP1 depends on the security domain SD. In a preferred embodiment, the agent AA may be merged with the Security Domain SD.

The proxy agent PRO may be implemented as an applet in a Java Card. The proxy agent PRO comprises five means M2, M3, M4, M5 and M6.

The means M2 is able to extract an application identifier ID from the message MG2. The means M3 is able to forward the message MG2 to the application AP1 if the extracted application identifier ID corresponds to said application AP1. For example the identifier ID may be the content of the TAR field or the AID of the application AP1. The means M4 is able to forward the response R2 to the administration agent AA.

The means M5 is able to check if the application AP1 successfully complies with a set of predefined security rules which are associated to the application AP1. The predefined security rules are assumed to be stored in the secure token SC.

In a preferred embodiment, the predefined security rules are stored in the security domain SD and the means M6 is able to delegate the checking of the predefined security rules to the security domain SD.

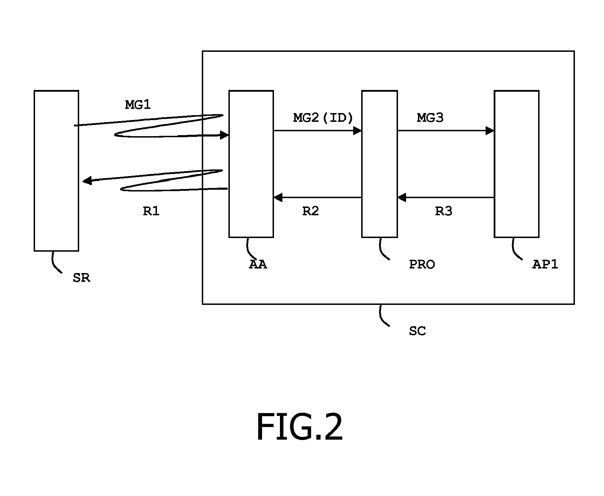

**Figure 2** shows an example of exchanges of between a distant server SR and an application AP1 according to the invention.

The secure electronic token SC comprises an administration agent AA, a proxy agent PRO and an application AP1. For example the application AP1 may be a Javacard toolkit applet. Although the telecom handset HM is not drawn on Figure 2, the message exchanges between the server SR and the token SC are assumed to be forwarded by an intermediate host machine.

In one embodiment, the distant server SR is a remote machine able to manage OTA messages according to TS-31.115 standard and able to manage HTTP messages.

Alternatively, the distant server SR may be able to manage HTTP messages only. In this case a second machine is able to manage OTA messages. This second machine is a remote administration server and the distant server SR is an HTTP application server.

The application AP1 may generate a request for initializing an OTA session. The application AP1 sends this request to the proxy agent PRO. The proxy agent forwards this request to the agent AA which sends an initial HTTP POST message to the remote server SR through the connected host machine.

As a consequence the remote server SR sends a HTTP response message MG1 to the token SC. The header of this HTTP response message contains a Content-Type field having a predefined value corresponding to the proxy agent PRO. For example, the Content-Type field may be equal to "application/31.115-message". The HTTP response message MG1 is received by the agent AA in the token SC. The agent AA checks the Content-Type field value. Since the Content-Type field contains a value corresponding to the proxy agent, the agent AA extracts the body of the received HTTP response message MG1. For example, the body may contain a 31.115 message that comprises an applicative command aiming at updating an object stored in the token SC. Then the agent AA extracts a message MG2 from the body. The message MG2 is built according to the TS-31.115 format. Then the agent AA sends message MG2 to the proxy agent PRO. The proxy agent PRO extracts the TAR field of the 31.115 message MG2. The TAR field allows the proxy agent PRO to find the targeted applet AP1. Then the proxy agent PRO generates a message MG3 based on the message MG2. In a preferred embodiment, the message MG3 comprises the message MG2, an additional layer compliant with the TS-23.040 standard and TLV (data structured in Tag-Length-Value) compliant with the TS-102 223 standard. Then the proxy agent PRO forwards the message MG3 to the applet AP1. Then the applet AP1 treats the received data and computes a response R3 corresponding to the received message MG3. The applet AP1 sends the response R3 to the proxy agent. The proxy agent PRO wraps the response R3 thanks to the usual 31.115 services and generates a response R2 from the response R3. In a preferred embodiment, the response R2 is extracted from the response R3. Then the proxy agent PRO forwards the response R2 to the agent AA. According to the OMA and GlobalPlatform standards, the agent AA retrieves the URI (Uniform Resource Identifier) of the server SR from the received HTTP response message MG1. Then the agent AA generates a HHTP POST message R1 which contains the applet response R2 and sends the HHTP POST message R1 to the server SR. The HTTP POST message R1 is generated with a header whose Content-type field is set to "application/31.115-proxy-request" and with a body comprising the response R2 provided by the applet AP1. Thus the server SR receives a HTTP POST message R1 corresponding to the HTTP response message MG1.

Thanks to the invention the application AP1 receives SMS as if the SMS were sent by a traditional OTA channel. Thus the existing applications may be reused without any modifications.

Thanks to the invention, a remote HTTP(S) server may send a full OTA script to a TS31.115-oriented application embedded in a secure electronic token.

In a preferred embodiment both the server SR and the agent AA comprise credentials allowing to secure the HTTP communication through HTTPS.

Advantageously, the proxy agent PRO comprises a means M5 which is able to check the preset security rules associated to the application AP1. The preset security rules are stored in the token SC.

Alternatively, the proxy agent PRO may comprise a means M6 that is able to delegate the checking of the preset security rules to the security domain SD corresponding to the targeted application.

An advantage of the invention is to allow handling 31.115 secured messages (SMS) over HTTP(S) channel. Thus both high speed transfer and confidence/reliability are provided compared to usual SMS mechanism.

Advantageously, a single administration session may be used for administrating a Smart Card Web Server (i.e. usual HTML files or images, request to servlets), for administrating the ETSI file system (through the RFM mechanism), for installing an application (through the RAM mechanism) and for triggering a Toolkit applet.

Thanks to the invention, the retry policy is handled by the token itself in accordance with the OMA and GlobalPlatform standards. This reduces the complexity for the remote administration server. Since the remote administration server may be a simple HTTP server, the deployment of the framework is easy and cheap.

The proxy agent PRO according to the invention may be used by several different applications. The mechanism of the invention allows accessing several kinds of embedded application with a unique proxy agent.

## Claims

1. A **method** of managing an application (AP1) embedded in a secured electronic token (SC), said secured electronic token (SC) being intended to receive a first message (MG1) from a distant machine (SR), said secured electronic token (SC) comprising an admin agent (AA) able to manage said first message (MG1), the first message (MG1) having a header and a body,
**characterized in that** said secured electronic token (SC) comprises a proxy agent (PRO) and **in that** said method comprises the steps of:
a) when the first message (MG1) is received by the admin agent (AA) from the distant machine (SR), building a second message (MG2) from the body of said first message (MG1),
b) forwarding said second message (MG2) to the proxy agent (PRO) if the header of said first message (MG1) contains an element having a preset value (PVA),
c) extracting an application identifier (ID) from the second message (MG2) in the proxy agent (PRO),
d) forwarding said second message (MG2) to the application (AP1) if the extracted application identifier (ID) corresponds to said application (AP1).

2. A method according to claim 1, wherein said method comprises the further step of:
c) when the application (AP1) generates a response (R3) to the second message (MG2), forwarding said response (R3) to the distant machine (SR) via successively the proxy agent (PRO) and the admin agent (AA).

3. A method according to one of claims 1 to 2, wherein said first message (MG1) complies with HTTP or HTTPS format.

4. A method according to claim 3, wherein the forwarding step of said second message (MG2) is performed if said element is the Content-Type field as defined by the HTTP (RFC 2616 HTTP/1.1) standard.

5. A method according to one of claims 1 to 4, wherein said second message (MG2) complies with 3GPP TS 31.115 or 3GPP TS 102.225 standards.

6. A method according to one of claims 1 to 5, wherein the forwarding of said second message (MG2) by the proxy agent (PRO) depends on a successful checking of preset security rules associated to the application (AP1).

7. A **secure electronic token** (SC) intended to receive a first message (MG1) from a distant machine (SR), the first message (MG1) having a header and a body, said secured electronic token (SC) comprising an admin agent (AA) able to manage said first message (MG1) and to build a second message (MG2) from the body of said first message (MG1), said secure electronic token (SC) being intended to comprise an application (AP1),
**characterized in that** said secure electronic token (SC) comprises a proxy agent (PRO), **in that** said admin agent (AA) comprises a first means (M1) able to check if the header of said first message (MG1) contains an element having a preset value (PVA), **in that** said proxy agent (PRO) comprises a second means (M2) able to extract an application identifier (ID) from the second message (MG2), and **in that** said proxy agent (PRO) comprises a third means (M3) able to forward the second message (MG2) to the application (AP1) if the extracted application identifier (ID) corresponds to said application (AP1).

8. A secure electronic token (SC) according to claim 7, wherein the application (AP1) generates a response (R3) to the second message (MG2) and wherein said proxy agent (PRO) comprises a fourth means (M4) able to forward said response (R3) to the admin agent (AA).

9. A secure electronic token (SC) according to one of claims 7 to 8, wherein said first message (MG1) complies with HTTP or HTTPS format

10. A secure electronic token (SC) according to one of claims 7 to 9, wherein said first means (M1) is able to check if the Content-Type field of the header of the first message (MG1) contains a preset value (PVA).

11. A secure electronic token (SC) according to one of claims 7 to 10, wherein said second message (MG2) complies with 3GPP TS 31.115 or 3GPP TS 102.225 standards.

12. A secure electronic token (SC) according to one of claims 7 to 11, wherein said secured electronic token (SC) is a smart card.

13. A secure electronic token (SC) according to one of claims 7 to 12, wherein said proxy agent (PRO) comprises a fifth means (M5) able to check preset security rules associated to said application (AP1).

14. A secure electronic token (SC) according to one of claims 7 to 12, wherein preset security rules are associated to said application (AP1) and wherein said proxy agent (PRO) comprises a sixth means (M6) able to delegate the checking of said preset security rules to a security domain (SD) as defined by GlobalPlatform version 2.2 for RAM standard.
